# EUROPEAN PATENT SPECIFICATION

(11) **EP 3 377 341 B1**
(45) Date of publication and mention of the grant of the patent: **01.06.2022**
(21) Application number: 16810095.6
(22) Date of filing: 16.11.2016
(51) Int. Cl.: B60G 17/005, B62D 61/12

(54) **WHEEL AXLE SUSPENSION WITH AXLE LIFT**
RADACHSENAUFHÄNGUNG MIT ACHSHUB
SUSPENSION D'ESSIEU DE ROUE AVEC DISPOSITIF DE LEVAGE D'ESSIEU

(30) Priority: 16.11.2015 NL 2015797
(43) Date of publication of application: 26.09.2018
(73) Proprietor: VDL Weweler B.V., 7325 WC Apeldoorn (NL)
(72) Inventor: BRAMER, Hans, 6961 WR Eerbeek (NL)
(74) Representative: EP&C
(86) International application number: PCT/NL2016/050796
(87) International publication number: WO 2017/086781

(56) References cited:
- EP-B1- 0 450 942
- WO-A1-2016/101046
- ES-U- 1 029 832
- ES-U- 1 051 061
- GB-A- 2 371 783
- NL-C2- 1 003 983

## Description

The invention relates to an air sprung wheel axle suspension comprising on either side of the vehicle:
a carrying bracket attached to a vehicle chassis, said carrying bracket comprising two opposing lateral plates;
a trailing arm having a longitudinal axis and having a front end that is pivotally attached to the carrying bracket by a pivot bolt that extends through aligned holes in the lateral plates, said pivot bolt having a bolt axis;
an air spring attached to the vehicle chassis and supporting the trailing arm at a location rearward and remote from the carrying bracket;
said wheel axle suspension being equipped with at least one axle lift including:
   - a lever pivotally suspended from the carrying bracket about a pivot axis, the lever having a first lever portion and a second lever portion,
   - an actuator support attached to the chassis or the carrying bracket, and
   - an actuator attached to said actuator support,
wherein the actuator operatively engages the first lever portion at a first engagement point defining a first lever arm relative to the pivot axis, and the trailing arm operatively engages the second lever portion at a second engagement point defining a second lever arm relative to the pivot axis.

Such air sprung wheel axle suspensions are known and are commonly found on commercial heavy vehicles such as trucks and (semi-)trailers.

A wheel axle suspension of this type is for example shown in Fig. 2 of EP 450 942 B1. This known wheel axle suspension comprises an axle lift with a lift beam which has aligned upstanding plates fixed at each side and these are pivotally connected to the bracket coaxially with the pivot bolt. An actuator is connected between the front end of the beam and the chassis. The rear end of the beam engages the lower side of the trailing arm.

In Fig. 6 of EP 450 942 another embodiment of a wheel axle suspension comprising an axle lift is shown. In this embodiment there is provided a central actuator and two beams being mirror images of each other, are arranged between the carrier brackets. Each beam extends laterally of the trailer and has an inner arm extending forwardly to engage the lower surface of the actuator that is arranged midway between the carrying brackets, and an outer arm which extends rearward and engages the lower surface of the trailing arm. This known axle lift requires a heavy design because due to the little longitudinal space available the lever arms are short and are offset with respect to each other.

It is an object of the invention to provide a wheel axle suspension with an axle lift which requires little space and can be constructed more lightweight.

According to the invention this object is achieved by a wheel axle suspensionas described at the outset wherein the lever is provided with a hanger element having an eyelet with which the lever is pivotally suspended from only one lateral plate of the carrying bracket such that said pivot axis and said bolt axis coincide, wherein the actuator is located offset inwards from the trailing arm and has a centre axis that intersects the longitudinal centre axis of the first lever portion, wherein the first and second lever portion are aligned such that the first engagement point and the second engagement point, seen from above, are located on a straight line that diagonally crosses the pivot axis.

Because the actuator has a centre axis that intersects the longitudinal centre axis of the first lever portion, torsional loads induced by the actuator on the first lever portion can be kept to a minimum. The first and second lever portion are aligned and the force from the trailing arm on the second lever portion operates on the same straight neutral line of the lever. Thereby the torsional loads on the lever are minimized. As a result the lever can be constructed more lightweight. Also the loads on the pivot point, which may be constituted by a bearing structure, may be minimised when the straight line crosses the pivot axis seen from above at the pivot point.

Moreover, the axle lift according to the invention is suspended from only one lateral plate of the carrying bracket, the lever of the axle lift can be suspended at only one end of the pivot bolt. Preferably the lever will be suspended from the pivot bolt end located at the inner plate of the carrying bracket, whereby the extended bolt length will not be in conflict with the position of the (double) wheels mounted to the axle.

Furthermore, the feature that the pivot axis of the lever coincides with the bolt axis has the effect that the lever and the trailing arm, which pivots around the pivot bolt, have the same pivot axis, whereby there is no relative movement at the second engagement point between the second lever portion and the trailing arm. This reduces friction which could induce an additional load to be overcome by the actuator. Furthermore it reduces the risk of wear of the components.

In a preferred embodiment according to the invention, a bush is fitted on the end of the pivot bolt, from which the hanger element is suspended, wherein the eyelet is arranged over the bush.

Preferably the bush and the eyelet of the hanger element constitute a bearing structure, more preferably a sliding bearing structure.

Preferably the bush is a flanged bush and the hanger element is entrapped between the flange and the inner lateral plate of the carrying bracket.

In a more preferred embodiment the pivot bolt is adapted such that the bush is allowed to be retrofitted to the pivot bolt without releasing or removing the pivot bolt from the carrying bracket. To this end the pivot bolt may be provided with features to fix the bush on the head or shaft sided end of the pivot bolt. Examples of such features are a threaded end on which the bush, which is provided in that event with an inner thread, can be screwed; or a threaded bore which can cooperate with a bolt to tighten the bush on the pivot bolt as is described in the non-published application NL2013315. Another example is a cotter pin that cooperates with a transverse bore through the pivot bolt to lock the bush on the pivot bolt.

In general, according to the invention, it is preferred that the axle lift is adapted to be retrofitted to the wheel axle suspension or removed from the wheel axle suspension without removing the pivot bolt from the carrying bracket.

According to the invention the actuator may be located offset inwards from the trailing arm. In this embodiment the position of the actuator, which often is an air bellows, is not in conflict with the position of the (double) wheels mounted to the axle. Nevertheless, also an alternative is conceivable wherein the actuator is located offset outwards from the trailing arm if enough space is available.

In a preferred embodiment the lever arm has one single pivot point, which, seen from above, is located at the inner lateral plate of the carrying bracket, i.e. on the lateral plate in use facing away of the vehicle wheels mounted to the axle, and wherein the second lever portion, seen from above extends diagonally from the pivot point to the second engagement point. By this configuration the load exerted by the trailing arm on the second lever portion is in line with the pivot point, such that the trailing arm does not incur torsional loads.

In a practical embodiment the second lever portion extends under an angle α with respect to the pivot axis which is smaller than 90°, wherein α preferably lies within the range between 50° and 85°.

In a preferred embodiment the lever comprises a straight beam, more preferably a hollow beam with a rectangular cross section. This provides a weight reduction in the axle lift structure.

In another possible embodiment the first lever portion extends under an angle upwardly with respect to and the second lever portion, seen in a side view perpendicular to the pivot axis. By this lever configuration the actuator support can be located on the carrying bracket. Alternatively, this configuration of the lever allows to locate the actuator support on a transverse beam or a strut of the chassis.

In yet another possible embodiment the first lever portion extends under an angle downwardly with respect to the second lever portion, seen in a side view perpendicular to the pivot axis. In this embodiment the actuator can be arranged partly below the carrier bracket whereby a compact construction of the wheel axle suspension in the longitudinal direction of the vehicle is allowed. This allows for example to fit an axle lift to a middle or a rear axle unit in a multiple axle (semi-)trailer or other vehicle. In use the actuator pushes the first lever portion rearward while the second lever portion tilts upward.

In a possible embodiment of the invention the second lever portion has an adjustable engagement foot that engages the trailing arm at the second engagement point, wherein the height of the adjustable engaging foot relative to the second lever portion is adjustable to be able to engage the trailing arm. The adjustable engaging foot allows that the axle lift and in particular the lever thereof can be adapted to be mounted to different wheel axle suspensions, in particular to different possible shapes and dimensions of trailing arms.

In yet a further preferred embodiment the hanger is attached to an upper side of the lever, wherein the hanger has an eyelet, with which the hanger is hooked around a protrusion such as a portion of the pivot bolt or an extension of the pivot bolt.

In some known wheel axle suspensions an extended pivot bolt needs to be fitted in order to be able to mount an axle lift to the pivot bolt. In other words this means that the pivot bolt is longer than a conventional pivot bolt necessary for only mounting the trailing arm to the carrying bracket. In other known wheel axle suspension there is an extension piece fitted to the pivot bolt end to allow mounting of an axle lift to the pivot bolt. Mounting an extended pivot bolt or extension pieces to an existing pivot bolt may conflict with the space needed for the wheels mounted to the axle, in particular when double wheels are mounted on each end of the axle.

It is within the present invention that an axle lift is arranged at both carrying brackets of the wheel axle suspension. However, its is also possible that within the present invention only on one carrying bracket of the wheel axle suspension an axle lift is arranged.

The invention will be described in more detail in the following description with reference to the drawings, in which:
Fig. 1 shows in a view in perspective a part of a preferred embodiment of a wheel axle suspension according to the invention,
Fig. 2 shows a side elevational view of the wheel axle suspension of Fig. 1 in a lifted state,
Fig. 3 shows a front elevational view of the wheel axle suspension of Fig. 1,
Fig. 4 shows in a view from below the wheel axle suspension of Fig. 1,
Fig. 5 shows in a view from above the wheel axle suspension of Fig. 1,
Fig. 6 shows in a view in perspective a lever of the axle lift of the wheel axle suspension of Fig. 1,
Fig. 7A shows schematically the lever of Fig. 6 in a side view with forces acting on it,
Fig. 7B shows schematically the lever of Fig 6 in a top view with forces acting on it,
Fig. 8A shows in a side view schematically an alternative embodiment of a lever of a wheel axle suspension according to the invention with forces acting on it,
Fig. 8B shows schematically the lever of Fig 8A in a top view with forces acting on it,
Fig. 9A shows in a side view schematically another alternative embodiment of a lever of a wheel axle suspension according to the invention with forces acting on it,
Fig. 9B shows schematically the lever of Fig 9A in a top view with forces acting on it, and
Fig. 10 shows a cross section through the carrying bracket of a wheel axle suspension according to the invention which allows retrofitting of an axle lift.

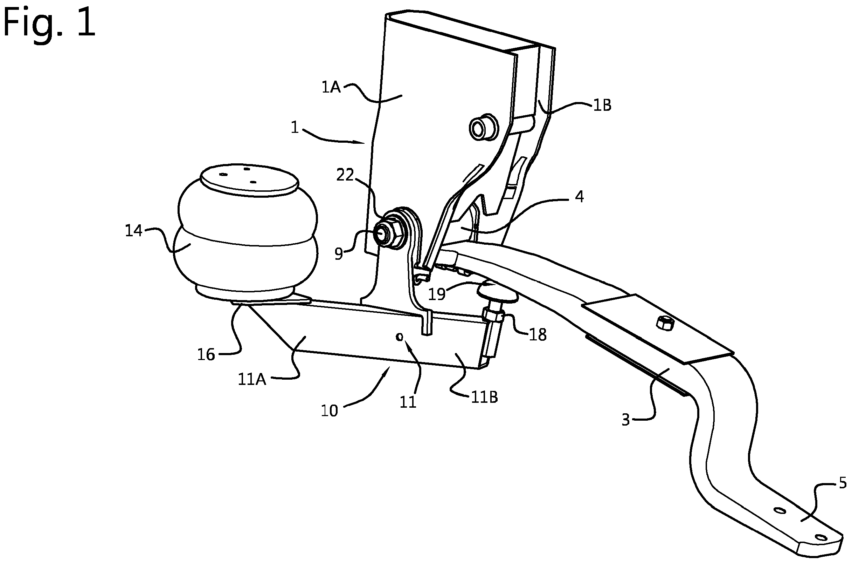

Fig. 1 shows a part of an air sprung wheel axle suspension for a commercial vehicle, for example a (semi-)trailer. The suspension comprises on either side of the vehicle a carrying bracket 1 which on an upper end thereof is attached to a chassis beam 2. The carrying bracket 1 comprises two lateral plates 1A and 1B and a front plate 1C. The plates 1A and 1B are each provided with a passage for a pivot bolt 9.

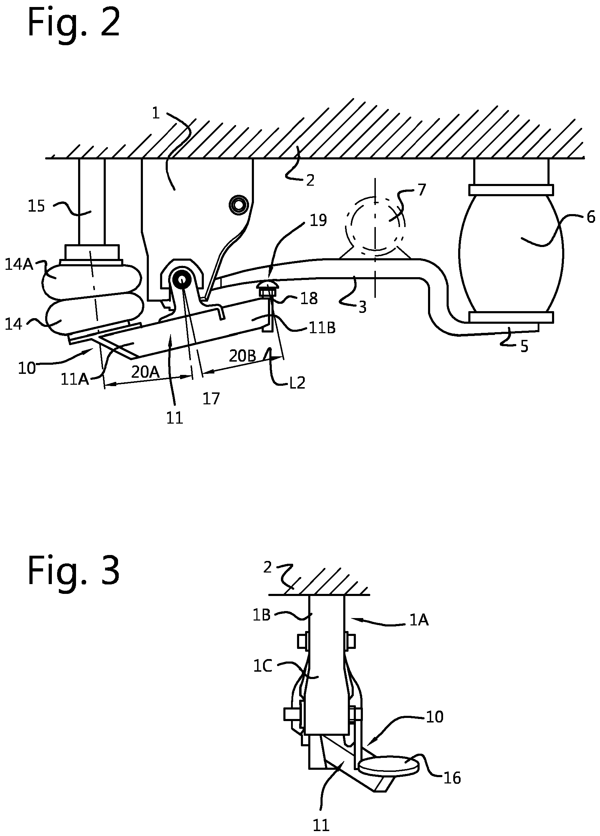

The wheel axle suspension furthermore comprises on either side of the vehicle a trailing arm 3 which has a front end that is provided with an eyelet 4. The eyelet 4 is arranged between the lateral plates 1A and 1B of the associated carrying bracket 1. A pivot bolt 9 extending through the eyelet 4 and the corresponding passages in the plates 1A, 1B pivotally mounts the front end of the trailing arm 3 to the carrying bracket 1. A tensioning nut 91 is screwed on the pivot bolt 9 to mount the eyelet 4 of the front end of the trailing arm 3 with a prescribed tension in the carrying bracket 1.
The rear end of the trailing arm 3 has a mounting surface 5 for an air spring 6 (see Fig. 2).

A hollow axle body 7, which is drawn in Fig. 2 in dashed lines, crosses the trailing arm 3 perpendicularly and is attached to the trailing arm 3, e.g. by commonly known U-shaped bolts or other suitable fastening means which are not shown here. In this example the axle body 7 is mounted on top of the trailing arm 3, but is may just as well be mounted below the trailing arm 3, as is well known in the art.

The wheel axle suspension is equipped with at least one axle lift 10. There may be arranged an axle lift at one of the carrying brackets 1 or on both carrying brackets 1 associated with the axle body. As such the wheel axle suspension is stiff enough to be lifted by one axle lift without deforming too much.

The axle lift 10 comprises a lever 11 which is formed in this specific embodiment as a hollow beam with a rectangular cross section.

A hanger 12 is attached to an upper side of the lever 11, preferably by welding. The hanger 12 has an eyelet 13, such that the hanger 12 can be hooked around a protrusion such as a portion of or an extension of the pivot bolt 9.

Thus, the hanger is suspended from one lateral plate 1A of the carrying bracket 1 in particular from a protrusion located at one lateral plate 1A of the carrying bracket 1. Said protrusion is preferably constituted by a portion of the pivot bolt 9 or a part arranged on the pivot bolt 9 such as a dedicated bush 22 arranged on a head or shank of the pivot bolt 9.

The forces induced by the axle lift 10, such as gravity forces to carry the weight of the axle lift, are transferred from the eyelet 13 in the hanger 12 to said protrusion located on said one plate (the inner plate 1A). There is a locking means provided to retain the hanger 12 associated with the protrusion. This locking means has generally a mere locking function and does not contribute to the transfer of forces induced by the axle lift into the rest of the suspension structure.

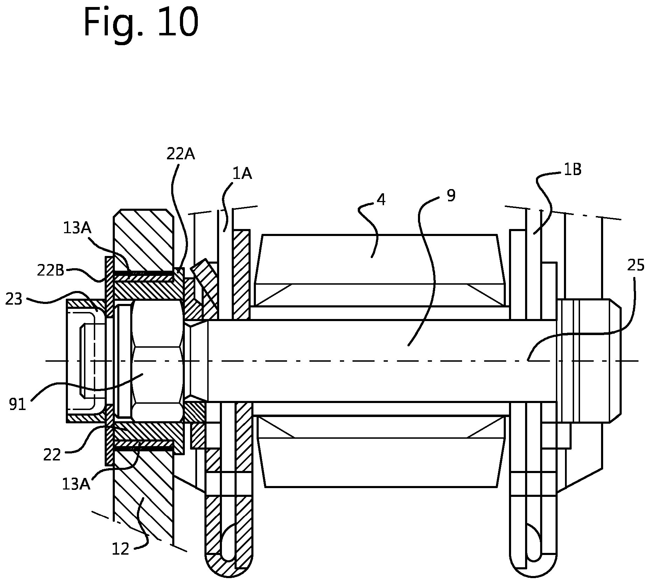

In a possible specific embodiment a bush 22 is fitted on the end of the pivot bolt 9, from which the hanger 12 is suspended. This is shown in Fig. 10. The eyelet 13 is arranged over the bush 22. The bush 22 may be a flanged bush 22 with flange wherein the hanger element is entrapped between the flange of the bush 22 and the inner lateral plate 1A of the carrying bracket 1. It is also possible that the flange 22A of the bush 22 is facing the lateral plate 1A of the carrying bracket 1 and that a ring 22B is arranged on the other end of the bush 22 as is shown in Fig. 10. The ring 22B and the bush 22 are locked on the pivot bolt 9 by a locking nut 23.

In a particularly preferred embodiment the pivot bolt 9 is adapted such that the bush 22 is allowed to be retrofitted to the pivot bolt 9 without releasing the corresponding tensioning nut 91 and/or removing the pivot bolt 9 from the carrying bracket 1. An example is shown in Fig. 10 where the bush 22 is retrofitted around the tensioning nut 91 of the pivot bolt 9. A locking nut 23 is screwed onto the end of the shank of the pivot bolt 9 to lock the bush 22 and the additional ring 22B in its position on the tensioning nut 91.

Also other locking means to lock the bush 22 in position on the bolt or on the nut 91 is possible. Without the intention to be limiting, one can think of braces, clips or brackets that are attached to the carrying bracket 1, the pivot bolt 9 or other parts, which prevent the bush 22 and/or the hanger 12 to be released from the carrying bracket/pivot bolt combination 1, 9. In Fig. 1 is shown another variant in which the bush 22 is entrapped by the common nut 91 which has been released from the pivot bolt 9 to fit the bush 22 an then replaced and tightened again.

The eyelet 13 is provided with bearing material 13A, such as PTFE or steel. The bush 22 and the eyelet 13 of the hanger element 12 constitute a sliding bearing structure allowing smooth pivotal movement of the hanger 12 and the lever with respect to the bush and the pivot bolt 9 around a pivot axis 25 that coincided with the axis of the pivot bolt 9.

Although it is also conceivable to arrange another bearing structure, such as for example with ball bearings, this is in general a more costly solution for this specific application.

The axle lift 10 also comprises an actuator 14. In the specific embodiment shown, the actuator 14 is an air bellows, but it is conceivable to use another pneumatic actuator, or for example a hydraulic actuator. The actuator 14 is attached to the chassis via an actuator support 15 (see Fig. 2). The actuator support 15 is attached to the chassis 2.

The actuator 14 is attached to an attachment plate 16 that is arranged on a front end of the lever 11.

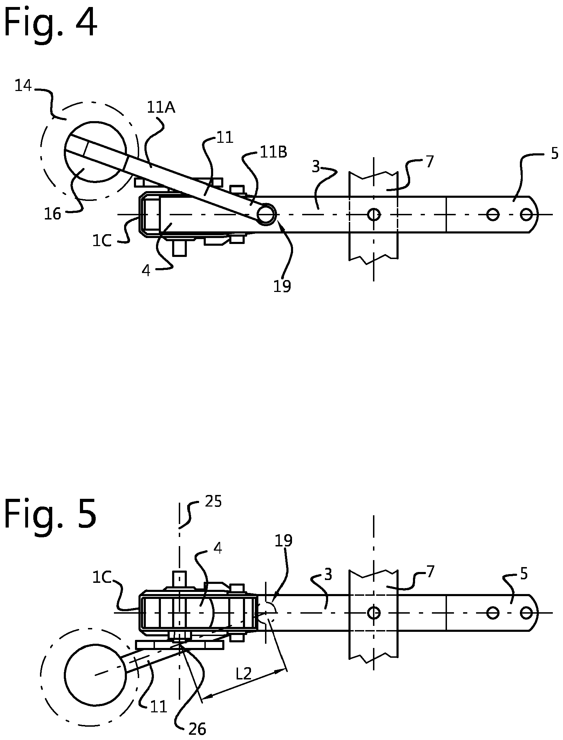

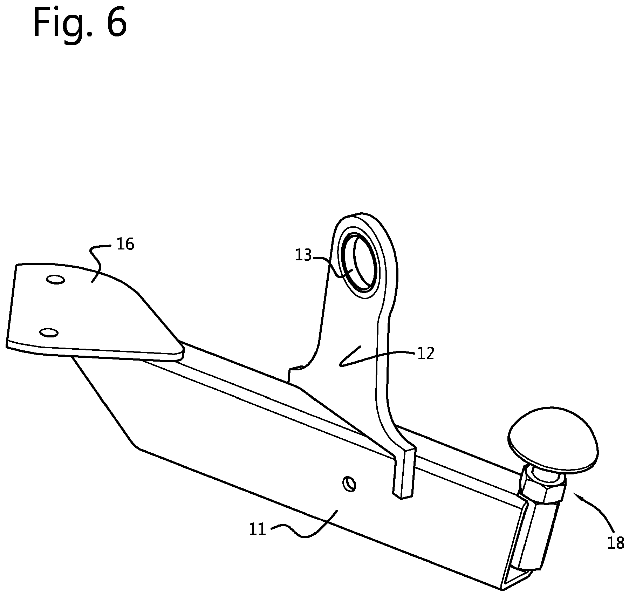

The lever 11 in the embodiment of Figs. 1-6 comprises a substantially straight beam that extends diagonally with respect to the longitudinal axis of the vehicle (cf. Figs 4 and 5). The lever 11 has a first lever portion 11A and a second lever portion 11B which are aligned.

The first lever portion 11A includes the attachment plate 16 for the actuator 14 and extends towards the hanger 12, to a line 17 extending perpendicular to the pivot axis and perpendicular to the beam 11 (cf. Fig. 2). The second lever portion 11B extends from said line 17 towards the rear end of the lever 11.

At the rear end of the lever 11 the second lever portion 11B has an adjustable engagement foot 18 that engages the trailing arm 3 at a second engagement point 19. The height of the adjustable engagement foot 18 is adjustable relative to the second lever portion 11B so as to be able to engage the trailing arm 3.

The intersection of the centre axis 14A of the actuator 14 and the attachment plate 16 defines a first engagement point of operational forces on the lever 11. The distance between the first engagement point and the pivot axis defines a first lever arm indicated by 20A in Fig. 2. The engagement point between the engagement foot 18 and the trailing arm 3 define a second engagement point 19 of operational forces on the lever 11. The distance between the second engagement point 19 and the pivot axis define a second lever arm indicated by 20B in Fig. 2.

Preferably the centre axis 14A of the actuator 14 intersects the longitudinal centre axis of the first lever portion 11A such that the forces exerted by the actuator 14 on the lever 11 do not induce a torsional load on the lever 11.

The location where the hanger element 12 is suspended from the carrying bracket 1 defines a pivot point 26 of the lever 11. Said one single pivot point 26, which, seen from above (cf. Fig. 5), is located at the inner lateral plate 1A of the carrying bracket 1, i.e. on the lateral plate 1A in use facing away of the vehicle wheels mounted to the axle. The second lever portion 11B, seen from above, extends diagonally from the pivot point 26 to the second engagement point 19.

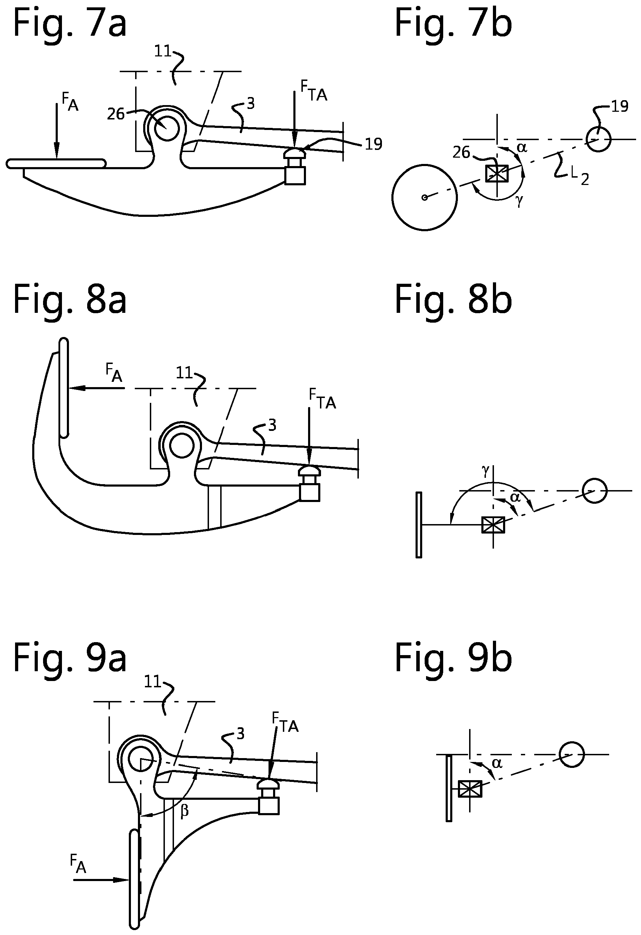

A straight line is defined between the second engagement point 19 and the pivot point 26 of the lever, which straight line has a length L₂ and extends under an angle α with respect to the pivot axis 25, wherein the length of the second lever arm 20B equals L₂ · sin α (cf. Figs 7A and 7B).
The angle α is smaller than 90°, preferably within the range between 50° and 85°.

The first lever portion 11A and the second lever portion 11B extend under an angle β, seen in a projection plane perpendicular to the pivot axis 25, wherein 90° ≤ β ≤ 270°.

In the example given in Fig. 7A the angle β is 180°. In other words the first and second lever portions 11A, 11B are aligned in this example as is also shown in Figs 1-6.

In the example given in Fig. 8A, the angle β is 270°. In other words, seen in a side view perpendicular to the pivot axis the first lever portion extends under an angle upwardly with respect to and the second lever portion (Fig. 8A). By this lever configuration the actuator support can be located on the carrying bracket. Alternatively this configuration of the lever allows to locate the actuator support on a transverse beam or a strut of the chassis.

In the example given in Fig. 9A the angle β is 90°. In this example, seen in a side view perpendicular to the pivot axis the first lever portion extends under an angle downwardly with respect to and the second lever portion (Fig. 9A). In this embodiment the actuator can be arranged partly below the carrier bracket whereby a compact construction of the wheel axle suspension in the longitudinal direction of the vehicle is allowed. This allows for example to fit an axle lift to a middle or a rear axle unit in a multiple axle (semi-)trailer or other vehicle. In use the actuator pushes the first lever portion rearward while the second lever portion tilts upward.

The first lever portion and the second lever portion may extend under an angle γ, seen in a projection plane, defined by the pivot axis and the longitudinal axis of the vehicle, wherein 120° ≤ γ ≤ 240°. This can be seen in Figs 7B, 8B and 9B.

## Claims

1. Air sprung wheel axle suspension comprising on either side of the vehicle:
a carrying bracket (1) attached to a vehicle chassis, said carrying bracket comprising two opposing lateral plates (1A, 1B);
a trailing arm (3) that has a front end that is pivotally attached to the carrying bracket (1) by a pivot bolt (9) that extends through aligned holes in the lateral plates (1A, 1B), said pivot bolt (9) having a bolt axis;
an air spring (6) attached to the vehicle chassis (2) and supporting the trailing arm (3) at a location rearward and remote from the carrying bracket (1);
said wheel axle suspension being equipped with at least one axle lift (10) including:
- a lever (11) pivotally suspended from the carrying bracket (1) about a pivot axis (25), the lever (11) having a first lever portion (11A) and a second lever portion (11B),
- an actuator support (15) attached to the chassis or the carrying bracket, and
- an actuator (14) attached to said actuator support (15),
wherein the actuator (14) operatively engages the first lever portion (11A) at a first engagement point defining a first lever arm (20A) relative to the pivot axis (25), and the trailing arm (3) operatively engages the second lever portion (11B) at a second engagement point (19) defining a second lever arm (20B) relative to the pivot axis (25),
**characterized in that** the lever (11) is provided with a hanger element (12) having an eyelet (13) with which the lever (11) is pivotally suspended from only one lateral plate (1A) of the carrying bracket (1), such that said pivot axis (25) and said bolt axis coincide,
wherein the actuator (14) is located offset inwards or outwards from the trailing arm (3) and has a centre axis (14A) that intersects the longitudinal centre axis of the first lever portion (11A),
wherein the first and second lever portion (11A, 11B) are aligned such that the first engagement point and the second engagement point (19), seen from above, are located on a straight line that diagonally crosses the pivot axis (25).

2. Wheel axle suspension according to claim 1, wherein the lever (11) is pivotally suspended from the inner lateral plate of the carrying bracket (1).

3. Wheel axle suspension according to claim 1 or 2, wherein a bush (22), such as a flanged bush, is fitted on the end of the pivot bolt (9), from which the hanger element (12) is suspended, wherein the eyelet (13) is arranged over the bush (22) or wherein, preferably, the bush (22) is a flanged bush and the hanger element is entrapped between the flange (22A) and the lateral plate (1A) of the carrying bracket (1).

4. Wheel axle suspension according to claim 3 , wherein the bush (22) and the eyelet (13) of the hanger element (12) constitute a bearing structure, preferably a sliding bearing structure.

5. Wheel axle suspension according to any of the claims 3 - 4, wherein the pivot bolt (9) is adapted such that the bush (22) is allowed to be retrofitted to the pivot bolt (9) without releasing or removing the pivot bolt (9) from the carrying bracket (1).

6. Wheel axle suspension according to any of the claims 1 - 6, wherein the single pivot point (26) of the lever, seen from above, is located at the inner lateral plate (1A) of the carrying bracket (1), i.e. on the lateral plate (1A) in use facing away of the vehicle wheels mounted to the axle, and wherein the second lever portion (11B), seen from above extends diagonally from the pivot point (26) to the second engagement point (19), wherein, preferably, the second lever portion (11B) extends under an angle α with respect to the pivot axis (25) which is smaller than 90°, wherein α preferably lies within the range between 50° and 85°.

7. Wheel axle suspension according to claim 6, wherein the straight line on which the first engagement point and the second engagement point (19), seen from above, are located, crosses the pivot axis (25) at the single pivot point (26).

8. Wheel axle suspension according to any of the preceding claims, wherein the lever comprises a straight beam.

9. Wheel axle suspension according to any of claims 1 - 7, wherein seen in a side view perpendicular to the pivot axis the first lever portion extends under an angle upwardly with respect to and the second lever portion.

10. Wheel axle suspension according to any of claims 1 - 7 , wherein seen in a side view perpendicular to the pivot axis the first lever portion extends under an angle downwardly with respect to and the second lever portion.

11. Wheel axle suspension according to any of the preceding claims, wherein the axle lift (10) is adapted to be retrofitted to the wheel axle suspension or removed from the wheel axle suspension without removing the pivot bolt (9) from the carrying bracket (1).

12. Wheel axle suspension according to any one of the preceding claims, wherein the second lever portion (11B) has an adjustable engagement foot (18) that engages the trailing arm (3) at the second engagement point (19), wherein the height of the adjustable engagement foot (18) relative to the second lever portion (11B) is adjustable to be able to engage the trailing arm (3).

13. Wheel axle suspension according to any one of the preceding claims, wherein an axle lift (10) is arranged at both carrying brackets (1) of the wheel axle suspension, or wherein only on one carrying bracket (1) of the wheel axle suspension an axle lift (10) is arranged.

14. Wheel axle suspension according to any one of the preceding claims, wherein the hanger (12) is attached to an upper side of the lever (11), wherein the hanger has an eyelet (13), with which the hanger (12) is hooked around a protrusion such as a portion of the pivot bolt (9) or an extension of the pivot bolt (9).

## Patentansprüche

1. Luftgefederte Radachsenaufhängung, die an jeder Seite des Fahrzeugs Folgendes umfasst:
einen Tragebügel (1), der an einem Fahrzeugfahrgestell angebracht ist, wobei der Tragebügel zwei gegenüberliegende seitliche Platten (1A, 1B) umfasst, einen Längslenker (3), der ein vorderes Ende aufweist, das durch einen Gelenkbolzen (9), der sich durch ausgerichtete Löcher in den seitlichen Platten (1A, 1B) erstreckt, schwenkbar an dem Tragebügel (1) angebracht ist, wobei der Gelenkbolzen (9) eine Bolzenachse aufweist,
eine Luftfeder (6), die an dem Fahrzeugfahrgestell (2) angebracht ist und den Längslenker (3) an einer Stelle hinter dem Tragebügel (1) und entfernt von diesem trägt,
wobei die Radachsenaufhängung mit mindestens einem Achslift (10) versehen ist, der Folgendes aufweist:
- einen Hebel (11), der schwenkbar um eine Schwenkachse (25) von dem Tragebügel (1) abgehängt ist, wobei der Hebel (11) einen ersten Hebelabschnitt (11A) und einen zweiten Hebelabschnitt (11B) aufweist,
- einen Aktuatorträger (15), der an dem Fahrgestell oder dem Tragebügel angebracht ist, und
- einen Aktuator (14), der an dem Aktuatorträger (15) angebracht ist,
wobei der Aktuator (14) an einem ersten Eingriffspunkt funktionsfähig mit dem ersten Hebelabschnitt (11A) in Eingriff steht, einen ersten Hebelarm (20A) relativ zur Schwenkachse (25) definierend, und wobei der Längslenker (3) an einem zweiten Eingriffspunkt (19) funktionsfähig mit dem zweiten Hebelabschnitt (11B) in Eingriff steht, einen zweiten Hebelarm (20B) relativ zur Schwenkachse (25) definierend,
**dadurch gekennzeichnet, dass** der Hebel (11) mit einem Aufhängelement (12) versehen ist, der eine Öse (13) aufweist, mit welcher der Hebel (11) schwenkbar von nur einer seitlichen Platte (1A) des Tragebügels (1) abgehängt ist, so dass die Schwenkachse (25) und die Bolzenachse zusammenfallen,
wobei der Aktuator (14) zum Längslenker (3) ein- oder auswärts versetzt angeordnet ist und eine Mittelachse (14A) aufweist, welche die Längsmittelachse des ersten Hebelabschnitts (11A) schneidet,
wobei der erste und der zweite Hebelabschnitt (11A, 11B) derart ausgerichtet sind, dass der erste Eingriffspunkt und der zweite Eingriffspunkt (19) von oben betrachtet auf einer geraden Linie angeordnet sind, welche die Schwenkachse (25) diagonal kreuzt.

2. Radachsenaufhängung nach Anspruch 1, wobei der Hebel (11) schwenkbar von der inneren seitlichen Platte des Tragebügels (1) abgehängt ist.

3. Radachsenaufhängung nach Anspruch 1 oder 2, wobei an dem Ende des Gelenkbolzens (9), von dem das Aufhängelement (12) abgehängt ist, eine Buchse (22), wie beispielsweise eine geflanschte Buchse, montiert ist, wobei die Öse (13) über der Buchse (22) angeordnet ist oder wobei die Buchse (22) vorzugsweise eine geflanschte Buchse ist und das Aufhängelement zwischen dem Flansch (22A) und der seitlichen Platte (1A) des Tragebügels (1) eingeschlossen ist.

4. Radachsenaufhängung nach Anspruch 3, wobei die Buchse (22) und die Öse (13) des Aufhängelements (12) eine Lagerstruktur bilden, vorzugsweise eine Gleitlagerstruktur.

5. Radachsenaufhängung nach einem der Ansprüche 3 bis 4, wobei der Gelenkbolzen (9) derart eingerichtet ist, dass es möglich ist, die Buchse (22) an den Gelenkbolzen (9) nachzurüsten, ohne den Gelenkbolzen (9) von dem Tragebügel (1) zu lösen oder zu entfernen.

6. Radachsenaufhängung nach einem der Ansprüche 1 bis 5, wobei der einzige Schwenkpunkt (26) des Hebels von oben betrachtet an der inneren seitlichen Platte (1A) des Tragebügels (1) angeordnet ist, d. h. an der seitlichen Platte (1A), die im Gebrauch weg von den Rädern des Fahrzeugs weist, die an die Achse montiert sind, und wobei sich der zweite Hebelabschnitt (11B) von oben betrachtet diagonal von dem Schwenkpunkt (26) zu dem zweiten Eingriffspunkt (19) erstreckt, wobei sich der zweite Hebelabschnitt (11B) in Bezug auf die Schwenkachse (25) vorzugsweise in einem Winkel α erstreckt, der kleiner als 90° ist, wobei α vorzugsweise im Bereich zwischen 50° und 85° liegt.

7. Radachsenaufhängung nach Anspruch 6, wobei die gerade Linie, auf welcher der erste Eingriffspunkt und der zweite Eingriffspunkt (19) von oben betrachtet angeordnet sind, die Schwenkachse (25) an dem einzigen Schwenkpunkt (26) kreuzt.

8. Radachsenaufhängung nach einem der vorhergehenden Ansprüche, wobei der Hebel einen geraden Arm umfasst.

9. Radachsenaufhängung nach einem der Ansprüche 1 bis 7, wobei sich der erste Hebelabschnitt, betrachtet in einer Seitenansicht senkrecht zur Schwenkachse, in einem Winkel in Bezug auf den zweiten Hebelabschnitt aufwärts erstreckt.

10. Radachsenaufhängung nach einem der Ansprüche 1 bis 7, wobei sich der erste Hebelabschnitt, betrachtet in einer Seitenansicht senkrecht zur Schwenkachse, in einem Winkel in Bezug auf den zweiten Hebelabschnitt abwärts erstreckt.

11. Radachsenaufhängung nach einem der vorhergehenden Ansprüche, wobei der Achslift (10) dazu eingerichtet ist, ohne Entfernen des Gelenkbolzens (9) von dem Tragebügel (1), an der Radachsenaufhängung nachgerüstet zu werden oder von der Radachsenaufhängung entfernt zu werden.

12. Radachsenaufhängung nach einem der vorhergehenden Ansprüche, wobei der zweite Hebelabschnitt (11B) einen justierbaren Eingriffsfuß (18) aufweist, der an dem zweiten Eingriffspunkt (19) mit dem Längslenker (3) in Eingriff steht, wobei die Höhe des justierbaren Eingriffsfußes (18) relativ zum zweiten Hebelabschnitt (11B) justierbar ist, um den Eingriff mit dem Längslenker (3) zu ermöglichen.

13. Radachsenaufhängung nach einem der vorhergehenden Ansprüche, wobei an beiden Tragebügeln (1) der Radachsenaufhängung ein Achslift (10) angeordnet ist oder wobei nur an einem Tragebügel (1) der Radachsenaufhängung ein Achslift (10) angeordnet ist.

14. Radachsenaufhängung nach einem der vorhergehenden Ansprüche, wobei der Aufhänger (12) an einer Oberseite des Hebels (11) angebracht ist, wobei der Aufhänger eine Öse (13) aufweist, mit welcher der Aufhänger (12) auf einen Vorsprung gehakt wird, wie beispielsweise einen Abschnitt des Gelenkbolzens (9) oder eine Verlängerung des Gelenkbolzens (9).

## Revendications

1. Suspension d'essieu de roue à ressort pneumatique comprenant de chaque côté du véhicule :
un portant (1) fixé à un châssis de véhicule, ledit portant comprenant deux plaques latérales opposées (1A, 1B) ;
un bras oscillant (3) qui a une extrémité avant qui est fixée de manière pivotante au portant (1) par un boulon de pivot (9) qui s'étend à travers des trous alignés dans les plaques latérales (1A, 1B), ledit boulon de pivot (9) ayant un axe de boulon;
un ressort pneumatique (6) fixé au châssis du véhicule (2) et supportant le bras oscillant (3) à un emplacement situé à l'arrière et à distance du portant (1);
ladite suspension de l'essieu de roue étant équipée d'au moins un élévateur d'essieu (10) comprenant :
- un levier (11) suspendu de manière pivotante au portant (1) autour d'un axe de pivotement (25), le levier (11) ayant une première partie de levier (11A) et une seconde partie de levier (11B),
- un support d'actionneur (15) fixé au châssis ou au portant, et
- un actionneur (14) fixé audit support d'actionneur, dans lequel l'actionneur (14) engage de manière opérationnelle la première partie de levier (11A) au niveau d'un premier point d'engagement définissant un premier bras de levier (20A) par rapport à l'axe de pivot (25), et le bras oscillant (3) engage de manière opérationnelle la seconde partie de levier (11B) au niveau d'un second point d'engagement (19) définissant un second bras de levier (20B) par rapport à l'axe de pivot (25),
**caractérisé en ce que** le levier (11) est muni d'un élément de suspension (12) ayant un oeillet (13) avec lequel le levier (11) est suspendu de manière pivotante à une seule plaque latérale (1A) du portant (1) de sorte que ledit axe de pivot (25) et ledit axe de boulon (9) coïncident,
dans lequel l'actionneur (14) est décalé vers l'intérieur du bras oscillant (3) et a un axe central (14A) qui intercepte l'axe central longitudinal de la première partie de levier (11A),
dans lequel la première et la seconde partie de levier (11A, 11B) sont alignées de telle sorte que le premier point d'engagement et le second point d'engagement (19), vus de dessus, sont situés sur une ligne droite qui croise diagonalement l'axe de pivot (25).

2. Suspension d'essieu de roue selon la revendication 1, dans laquelle le levier (11) est suspendu de manière pivotante à la plaque latérale intérieure du portant (1).

3. Suspension d'essieu de roue selon la revendication 1 ou 2, dans laquelle une douille (22), telle qu'une douille à bride, est montée sur l'extrémité du boulon de pivotement (9), à laquelle l'élément de suspension (12) est suspendu, dans laquelle l'œillet (13) est disposé sur la douille (22) ou dans laquelle, de préférence, la douille (22) est une douille à bride et l'élément de suspension (12) est piégé entre la bride (22A) et la plaque latérale (1A) du portant (1).

4. Suspension d'essieu de roue selon la revendication 3, dans laquelle la douille (22) et l'œillet (13) de l'élément de suspension (12) constituent une structure de palier, de préférence une structure de palier lisse.

5. Suspension d'essieu de roue selon l'une quelconque des revendications 3 - 4, dans laquelle le boulon de pivotement (9) est adapté de telle sorte que la douille (22) peut être montée ultérieurement sur le boulon de pivotement (9) sans libérer ou retirer le boulon de pivotement (9) du portant (1).

6. Suspension d'essieu de roue selon l'une quelconque des revendications 1 à 5, dans laquelle le point de pivotement unique (26) du levier, vu de dessus, est situé au niveau de la plaque latérale intérieure (1A) du portant (1), c'est à dire sur la plaque latérale (1A), en utilisation, faisant face à l'opposé des roues du véhicule montées sur l'essieu, et dans lequel la seconde partie de levier (11B), vue du dessus, s'étend diagonalement du point de pivot (26) au second point d'engagement (19), dans lequel de préférence la seconde partie de levier (11B) s'étend sous un angle α par rapport à l'axe de pivot (25) qui est inférieur à 90°, dans lequel α se situe de préférence dans la plage entre 50° et 85°.

7. Suspension d'essieu de roue selon la revendication 6, dans laquelle la ligne droite sur laquelle le premier point d'engagement et le second point d'engagement (19), vus de dessus, sont situés, croise l'axe de pivot (25) au niveau du point de pivot unique (26).

8. Suspension d'essieu de roue selon l'une quelconque des revendications précédentes, dans laquelle le levier comprend une poutre rectiligne.

9. Suspension d'essieu de roue selon l'une quelconque des revendications 1 à 7, dans laquelle, vue latérale perpendiculairement à l'axe de pivotement, la première partie de levier s'étend sous un angle vers le haut par rapport à et la deuxième partie de levier.

10. Suspension d'essieu de roue selon l'une quelconque des revendications 1 - 7, dans laquelle, en vue latérale perpendiculaire à l'axe de pivotement, la première partie de levier s'étend sous un angle vers le bas par rapport à et la deuxième partie de levier.

11. Suspension d'essieu de roue selon l'une quelconque des revendications précédentes, dans laquelle l'élévateur d'essieu (10) est adapté pour être monté ultérieurement sur la suspension d'essieu de roue ou retiré de la suspension d'essieu de roue sans retirer le boulon de pivot (9) du portant (1).

12. Suspension d'essieu de roue selon l'une quelconque des revendications précédentes, dans laquelle la deuxième partie de levier (11B) comporte un pied d'engagement réglable (18) qui engage le bras oscillant (3) au niveau du deuxième point d'engagement (19), dans laquelle la hauteur du pied d'engagement réglable (18) par rapport à la deuxième partie de levier (11B) est réglable pour pouvoir engager le bras oscillant (3).

13. Suspension d'essieu de roue selon l'une quelconque des revendications précédentes, dans laquelle un élévateur d'essieu (10) est disposé sur les deux portants (1) de la suspension d'essieu de roue ou uniquement sur un portant (1) de la suspension d'essieu de roue.

14. Suspension d'essieu de roue selon l'une quelconque des revendications précédentes, dans laquelle le dispositif de suspension (12) est fixé à un côté supérieur du levier (11), dans laquelle le dispositif de suspension a un œillet (13), avec lequel le dispositif de suspension (12) est accroché autour d'une saillie telle qu'une partie du boulon de pivot (9) ou une extension du boulon de pivot (9).
